# EUROPÄISCHE PATENTSCHRIFT

(11) **EP 2 021 222 B1**
(45) Veröffentlichungstag und Bekanntmachung des Hinweises auf die Patenterteilung: **22.09.2010**
(21) Anmeldenummer: 07725875.4
(22) Anmeldetag: 30.05.2007
(51) Int. Cl.: B61C 17/04, H02G 3/04

(54) **MONTAGEEINHEIT FÜR EIN SCHIENEN-TRIEBFAHRZEUG**
MOUNTING UNIT FOR A RAIL-BOUND TRACTION VEHICLE
UNITÉ DE MONTAGE POUR UN VÉHICULE FERROVIAIRE AUTOMOTEUR

(30) Priorität: 31.05.2006 DE 102006026459
(43) Veröffentlichungstag der Anmeldung: 11.02.2009
(73) Patentinhaber: Bombardier Transportation GmbH, 10785 Berlin (DE)
(72) Erfinder: KRÖNKE, Marko, 34128 Kassel (DE); EHRHARDT, Michael, 68165 Mannheim (DE); ZAUN, Norbert, 34289 Zierenberg (DE); SCHNEIDER, Stefan, 67593 Westhofen (DE); KREILE, Markus, 34277 Fuldabrück (DE)
(74) Vertreter: Patentanwälte Bressel und Partner
(86) Internationale Anmeldenummer: PCT/EP2007/005026
(87) Internationale Veröffentlichungsnummer: WO 2007/137872

(56) Entgegenhaltungen:
- DE-A1- 3 545 517
- DE-A1- 10 031 608
- DE-C1- 19 522 405
- FR-A1- 2 734 218
- SU-A1- 1 775 782

## Beschreibung

Die Erfindung betrifft eine Montageeinheit für ein Schienen-Triebfahrzeug und ein Verfahren zum Montieren eines Schienen-Triebfahrzeuges.

Unter einem Schienen-Triebfahrzeug wird ein Schienenfahrzeug verstanden, das zumindest einen Motor zum Antreiben des Schienenfahrzeugs aufweist. Es kann sich dabei zum Beispiel um eine Lokomotive mit zwei Führerständen an den einander entgegen gesetzten Enden der Lokomotive handeln oder auch um einen Triebkopf für einen Zugverband mit lediglich einem Führerstand.

In Schienen-Triebfahrzeugen ist eine Vielzahl von Rohren und Kabeln für unterschiedliche Funktionen zu verlegen. Deren Montage erfordert einen erheblichen Anteil der für die Herstellung des Triebfahrzeuges insgesamt benötigten Zeit.

DE 35 45 517 A1 beschreibt einen Kabelbaum für ein Kraftfahrzeug, wobei ein biegesteifer Rahmen verwendet wird, der einerseits als Kabelbaumträger und dazu noch als Kabelbaumummantelung dient und der andererseits gleichzeitig als Verlegevorrichtung für die Kabel als Teil des Kabelbaums durch den Arm eines Industrieroboters ausgebildet ist. Der Rahmen kann in einzelne Rahmensegmente aufgeteilt sein, um den gesamten Kabelbaum mit mehreren Abzweigungen zu versehen.

SU 1775782 A1 betrifft den U-Bahn-Waggonbau. Es wird ein Kabelkasten offenbart, der selbst einen Körper bildet, mit rechteckigem Profil eines Querschnitts, bestehend aus einem Unterbau und Zwischenwand, die zwischen vertikalen Stützpfeilern montiert sind.

FR 2 734 218 A1 beschreibt eine Fixierungseinrichtung für ein Kabelbündel an dem Körper eines Motorfahrzeuges. Das Kabelbündel ist innerhalb einer Hülle gehalten.

Es ist möglich, eine Mehrzahl von Rohren oder Kabeln zu einem Bündel zusammenzufügen und das Bündel in das Triebfahrzeug einzubringen. Hierfür wird jedoch bei der Vormontage des Bündels erheblicher Raum in der Montagehalle benötigt. Ferner sind die Möglichkeiten der Vormontage insbesondere in der Serienfertigung von Lokomotiven mit unterschiedlichen Antriebsaggregaten (z. B. dieselelektrischen Antriebsaggregaten und rein elektrischen Antriebsaggregaten) bereits deshalb begrenzt, weil die Antriebsaggregate an unterschiedlichen Orten der Lokomotiven angeordnet werden, unterschiedliche Abmessungen aufweisen und zumindest teilweise unterschiedliche Funktionen durch die Rohre und Kabel zu realisieren sind.

Es ist eine Aufgabe der vorliegenden Erfindung, die Montage von Rohren und Kabeln bei der Serienfertigung von Schienen-Triebfahrzeugen zu erleichtern und zu verkürzen.

Der Schutzumfang ist durch die beigefügten Patentansprüche definiert.

Ein Grundgedanke der vorliegenden Erfindung besteht darin, Rohre und Leitungen vor deren Anordnung in einem Fahrzeugkörper des Schienen-Triebfahrzeuges zu einer

Montageeinheit zusammenzufügen und die Montageeinheit insgesamt in den Fahrzeugkörper einzubringen. Dabei können zumindest Teile des Fahrzeugkörpers, wie z. B. das Dach erst nach der Montageeinheit montiert werden.

Besonders bevorzugt wird, dass der Fahrzeugkörper für Triebfahrzeuge mit unterschiedlichen Antriebsaggregaten im Wesentlichen gleich ausgestaltet ist und/oder der Verlauf der in der Montageeinheit zusammengefassten Rohre und Leitungen unabhängig von der Art des Antriebsaggregats ist. Insbesondere weist die Montageeinheit die gleichen äußeren Abmessungen auf, wobei jedoch einzelne Leitungen oder Rohre sowie deren Anschlüsse je nach Art des Antriebsaggregats variieren können. Unter gleichen äußeren Abmessungen wird insbesondere verstanden, dass die in der Montageeinheit gebildeten Bündel, die gleichen Längen und Breiten aufweisen, einschließlich derjenigen Elemente des Bündels, die die Leitungen und Rohre miteinander verbinden (z. B. Kabel- und Rohrhalter) und/oder umfassen (z. B. Kabelkanal).

Beispielsweise kann das Antriebsaggregat, welches z. B. ein dieselektrisches Aggregat (Dieselmotor mit elektrischem Generator) oder ein elektrisches Antriebsaggregat (Stromrichter, Zwischenkreis und elektrische Verschienung) sein kann, quer zur Fahrtrichtung betrachtet in der Mitte des Triebfahrzeuges angeordnet sein, so dass z. B. in Fahrtrichtung gesehen sowohl rechts als auch links von dem Antriebsaggregat ein Zwischenraum zwischen Antriebsaggregat und Außenwand des Triebfahrzeugs vorhanden ist. In diesem Fall kann die Montageeinheit vorzugsweise einen ersten Zweig und einen zweiten Zweig aufweisen, wobei sich in Längsrichtung der Zweige jeweils ein Bündel mit Rohren und/oder elektrischen Kabeln und/oder nichtelektrischen Leitungen erstreckt und wobei sich der erste Zweig in Fahrtrichtung durch den Zwischenraum auf der einen Seite des Antriebsaggregats und sich der zweite Zweig durch den Zwischenraum auf der gegenüber liegenden Seite des Antriebsaggregats erstreckt. Ferner können die Zweige an einer ersten Verzweigung der Montageeinheit von einem gemeinsamen Strang bzw. Bündel der Montageeinheit abzweigen und in Fahrtrichtung auf der gegenüber liegenden Seite des Antriebsaggregats an einer zweiten Verzweigung wieder zusammenführen. Dabei müssen aber nicht alle Leitungen und Rohre durchgehend von der ersten Verzweigung bis zu der zweiten Verzweigung führen oder umgekehrt. Vielmehr können einzelne Leitungen oder Rohre an beliebiger Stelle eines der Zweige von dem gemeinsamen Bündel wegführen oder dort enden oder dort an ein später zu montierendes Rohr oder Leitung angeschlossen werden.

Bei der Montageeinheit handelt es sich vorzugsweise um einen mechanischen Verbund mit Gasrohren z. B. für ein pneumatisches System und/oder mit Fluidrohren z. B. für ein Feuenöschsystem, mit elektrischen und/oder nichtelektrischen Leitungen zur Übertragung von elektrischen bzw. nichtelektrischen Signalen (Signalleitungen) und mit elektrischen Leitungen zur Versorgung von Verbrauchern mit elektrischer Energie (Energieleitungen). Der gesamte Verbund mit den Gasrohren und/oder Fluidrohren, den Signalleitungen und den Energieleitungen wird vormontiert und einstückig (d. h. nicht in mehr als einem Stück) in den Fahrzeugkörper eingebracht. Dabei sind vorzugsweise eine Anzahl von zusätzlichen Bauelementen in der Montageeinheit verbaut bzw. angeordnet, z. B. Kabelbinder, zusätzliche tragende Teile, Rohrschellen, Führungselemente zur Führung der Rohre und/oder Leitungen und/oder Kanäle oder Gehäuse, in denen sich die Rohre und/oder Leitungen erstrecken. Insbesondere für die Leitungen kann der mechanische Verbund zumindest stellenweise auch dadurch hergestellt werden, dass die Leitungen auf ein tragendes Teil des mechanischen Verbundes aufgelegt werden.

Wenn nicht weiter spezifiziert, wird unter "Fluidrohre° im Folgenden Gasrohre z. B. mit Medium Luft (für z. B. Brems- und Hilfbetriebeversorgung bzw. technische Gase) und/oder Flüssigkeitsrohre z. B. für Feuerlöschwasser verstanden.

Der Verbund wird in bevorzugter Ausgestaltung eines Montageverfahrens vormontiert und z. B. mit einem Kran von oben in den Fahrzeugkörper hinab gelassen. Ebenfalls bevorzugt wird, dass zumindest Teilbereiche und/oder Längsabschnitte des Verbundes selbst tragend ausgestaltet sind. Allerdings wird ferner bevorzugt, dass bei der Montage zumindest eine zusätzliche Traverse verwendet wird, wobei der Verbund an mehreren Stellen mit der Traverse verbunden wird und die Traverse nach dem Einbringen der Montageeinheit von dem Verbund getrennt wird, so dass die Traverse wieder entfernt werden kann und z. B. für die Montage des nächsten Schienen-Triebfahrzeuges der Serie eingesetzt werden kann.

In einer besonderen Ausgestaltung erstreckt sich die Montageeinheit zumindest über die gesamte Länge eines Maschinenraums des Schienen-Triebfahrzeuges und bevorzugt bis zu einem Führerstand oder- soweit vorhanden - zu beiden Führerständen an den entgegensetzten Enden des Schienen-Triebfahrzeuges oder mindestens bis zum Bereich der Führerhausrückwand (oder es erstreckt sich ein Teil des Rohr- und Kabelbündels bis zum Bereich der Führerhausrückwand). Auf diese Weise können sämtliche Rohre und Leitungen, die den Maschinenraum durchqueren sollen, in einem einzigen Montageschritt in den Maschinenraum eingebracht werden.

In besonders bevorzugter Ausgestaltung ist die Montageeinheit so ausgestaltet, dass alle zu einem Bündel oder zu Bündeln zusammengefassten Rohre und Leitungen, insbesondere die Bündel der beiden oben genannten Zweige, auf gleicher Höhe verlaufen und insbesondere zur Montage an einem Boden des Schienen-Triebfahrzeuges ausgestaltet sind. Damit entfällt die zeitaufwändige Montage zumindest dieser Abschnitte in Seitenwänden des Schienenfahrzeugs oder in Trennwänden des Schienenfahrzeugs. Bevorzugt sind zumindest alle Rohre und Leitungen der Montageeinheit, die in dem Maschinenraum verlegt werden sollen, auf gleicher Höhe zur Bodenmontage ausgestaltet.

Zu dem Verbund gehören vorzugsweise auch Rohre für ein oder mehrere Kühlsysteme, wobei die Rohre beim Betrieb des Triebfahrzeugs Gas oder Flüssigkeit führen können (Kühlrohre). Zum Beispiel werden bei einer dieselelektrischen Lokomotive Hilfsstromrichter durch das Kühlmedium gekühlt, welches in diesen Rohren zirkuliert.

Zum Umfang der Erfindung gehört ferner auch ein Schienen-Triebfahrzeug, das den mechanischen Verbund der Fluidrohre, der Signalleitungen und der Energieleitungen in einer der Ausgestaltungen aufweist, die in dieser Beschreibung beschrieben sind. Außerdem gehört zum Umfang der Erfindung ein Verfahren zum Montieren eines Schienen-Triebfahrzeuges, wobei zunächst aus Fluidrohren, elektrischen und nichtelektrischen Leitungen zur Übertragung von Signalen (Signalleitungen) und elektrischen Leitungen zur Versorgung von Verbrauchem mit elektrischer Energie (Energieleitungen) sowie optional aus zusätzlichen Kühlrohren eine Montageeinheit gebildet wird, die einen mechanischen Verbund der Fluidrohre, der Signalleitungen, der Energieleitungen und optional der Kühlleitungen aufweist, und wobei der gesamte Verbund einstückig in einen Fahrzeugkörper des Schienen-Triebfahrzeuges eingebracht wird. Auf optionale Ausgestaltungen des Verfahrens wurde bereits eingegangen.

Z. B. wird der Verbund auf den Boden des Fahrzeugs gelegt und anschließend ein zweiter Boden auf dem Verbund verlegt, sodass die Bündel zumindest abschnittsweise in einem Hohlboden liegen. Zumindest abschnittsweise kann das Bündel aber auch durch einen nach dem Einbringen des Bündels zu montierenden Kabelkanal gegen äußere Einwirkungen geschützt werden. Außerdem können sich Abschnitte der Bündel aus dem Hohlboden heraus nach oben erstrecken.

Ausführungsbeispiele der Erfindung werden nun unter Bezugnahme auf die beigefügte Zeichnung beschrieben. Die einzelnen Figuren der Zeichnung zeigen:
- Figur 1: eine schematische Ansicht von oben auf das Innere einer Lokomotive mit zwei Führerständen an in Längsrichtung gegenüber liegenden Enden der Lokomotive,
- Figur 2: eine schematische Darstellung von Leitungsbündeln mit elektrischen und/oder nichtelektrischen Leitungen für verschiedene Funktionen der in Figur 1 dargestellten Lokomotive,
- Figur 3: eine schematische Darstellung der Anordnung eines Rohrbündels in der Figur 1 und Figur 2 dargestellten Lokomotive,
- Figur 4: eine schematische Seitenansicht eines mechanischen Verbundes aus mehreren elektrischen und/oder nichtelektrischen Leitungen und/oder aus mehreren elektrischen und/oder nichtelektrischen Leitungen und Rohrleitungen mit Elementen, die zur Montage des Verbundes verwendet werden,
- Figur 5: einen Querschnitt durch eine erste Ausführungsform eines Verbundes gemäß Figur 4 und
- Figur 6: eine zweite Ausführungsform eines Verbundes gemäß Figur 4.

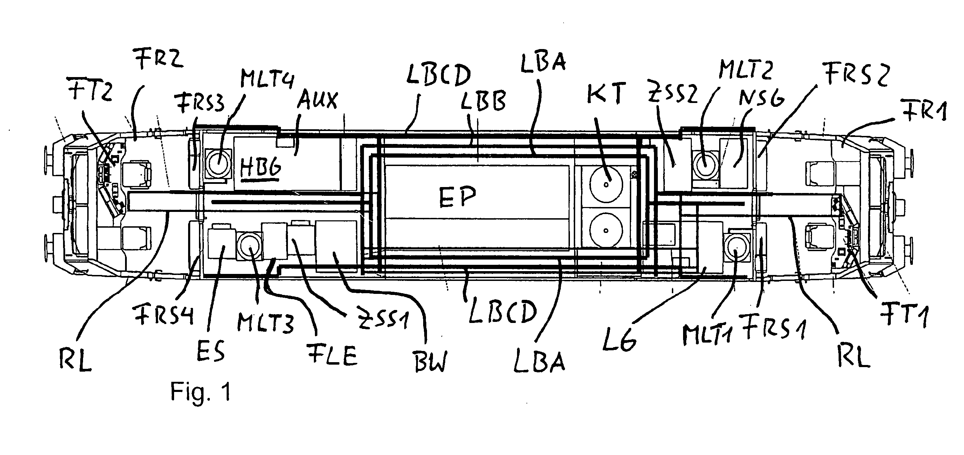

Fig. 1 zeigt eine Lokomotive mit einem rein elektrischen Antriebsaggregat EP zum Betrieb an einem Bahn-Stromnetz, z. B. einem Stromnetz mit elektrischem Fahrdraht oberhalb der Lokomotive. Es sind verschiedene Einrichtungen im Innem der Lokomotiven dargestellt und teilweise mit Bezugszeichen bezeichnet. Darüber hinaus kann die Lokomotive weitere Einrichtungen aufweisen.

Dem Antriebsaggregat EP besteht im Wesentlichen aus zwei Stromrichtem, aus einer elektrischen Verschienung mit zugeordneten elektrischen Bauelementen wie Kondensatoren und Induktivitäten sowie aus einem Gleichrichter zum Anschluss an das Wechselspannungs-Stromnetz. Das Antriebsaggregat EP ist in Fahrtrichtung (Längsrichtung) etwa in der Mitte zwischen den beiden Enden der Lokomotive angeordnet Ferner ist es quer zur Fahrtrichtung ebenfalls etwa in der Mitte der Lokomotive angeordnet, sodass im Maschinenraum rechts und links jeweils ein Gang frei bleibt, durch den ein Mensch, beispielsweise ein Wartungstechniker, gehen kann. In Fahrtrichtung vor und hinter dem Maschinenraum sind die Einrichtungen jedoch rechts und links an den Seiten der Lokomotiven angeordnet, sodass lediglich in der Mitte ein Gang frei bleibt, durch den ein Mensch von einem Führerraum FR1 am vorderen Ende (rechts in Fig. 1) bzw. FR2 am hinteren Ende der Lokomotive in den Maschinenraum gehen kann (der Mensch kann nur durch den linken Seitengang gehen, der rechte ist als Stichgang ausgeführt).

Bevorzugtermaßen weist eine Lokomotive mit dieselelektrischem Antriebsaggregat (mit einem Dieselmotor und einem davon angetriebenen elektrischen Generator) dieselbe Aufteilung ihres Innenraums auf, mit denselben Einrichtungen. Lediglich Einrichtungen, die spezifisch an die Art des Antriebsaggregats angepasst sind, weisen gegenüber der in Fig. 1 dargestellten Lokomotive Änderungen auf bzw. sind durch entsprechende Einrichtungen ersetzt oder entfallen.

Auch der später noch zu beschreibende mechanische Verbund aus elektrischen Leitungen und Rohren ist weitgehend identisch bei der Lokomotive mit elektrischem Antriebsaggregat und bei der Lokomotive mit dieselelektrischem Antriebsaggregat.

Das jeweilige Antriebsaggregat wird durch eine Kühleinrichtung KT gekühlt, die in Fahrtrichtung vor dem Antriebsaggregat EP ebenfalls im Maschinenraum angeordnet ist. Auch muss die entsprechende Elektrik zur Steuerung des Betriebes des Antriebsaggregats angeschlossen werden.

Die einzelnen in Fig. 1 mit Bezugszeichen bezeichneten Einrichtungen sind:
- ein Hilfsbetriebsgerüst HBG mit Hilfsvorrichtungen, die dem Betrieb von Einrichtungen dienen, welche nicht unmittelbar für den Antrieb der Lokomotive erforderlich sind,
- ein Niederspannungsgerüst NSG zur elektrischer Versorgung von Hilfsvorrichtungen, die dem Betrieb von Einrichtungen dienen, welche nicht unmittelbar für den Antrieb der Lokomotive erforderlich sind, und/oder von anderen Vorrichtungen,
- optional eine Feuerlöscheinrichtung FLE,
- optional ein Bremswiderstand BW in dem Bremsenergie der Lokomotive dissipiert werden kann,
- ein Elektronikblock ES mit elektronischen und/oder mikroelektronischen Vorrichtungen zur Steuerung des Betriebs der Lokomotive,
- Antriebsmotor-Kühleinrichtungen MLT1 bis MLT4,
- ein oder mehrere Hiffsbetriebeumrichter (wie auch das Hilfsbetriebsgerüst HBG in Block AUX integriert) mit einem Umrichter zur elektrischen Versorgung von Hilfsvorrichtungen, die dem Betrieb von Einrichtungen dienen, welche nicht
unmittelbar für den Antrieb der Lokomotive erforderlich sind, und/oder von anderen Vorrichtungen,
- ein Luftgerüst LG mit Einrichtungen, die der Erzeugung und Speicherung von Druckluft für eine Bremsanlage und Hilfsbetriebsanlagen dienen, und
- ein oder zwei Zugsicherungseinrichtungen ZSS1 und ZSS2 zur Gewährleistung eines sicheren Fahrbetriebes.

Ferner weist die Lokomotive in Fahrtrichtung vorne und in Fahrtrichtung hinten in dem Führerraum FR1 bzw. FR2 jeweils einen Führertisch FT1 bzw. FT2 auf. Der Führerraum FR1, FR2 wird durch eine Rückwand mit Führerraumrückwandschränken FRS1, FRS2 bzw. FRS3, FRS4 gegen den Mittelteil der Lokomotive abgetrennt. Dem Führerraum FR1, FR2 unmittelbar benachbart erkennt man Fahrmotorlüftertürme MLT1 bzw. MLT4. In Fahrtrichtung neben diesen Lüftertürmen, jedoch durch einen Mittelgang getrennt, befindet sich am einen Führerabteil der Elektronikblock ES zur Aufnahme diverser elektronischer und mikroelektronischer Einrichtungen, die für den Betrieb der Lokomotive eingesetzt werden, und am anderen Führerabteil das Niederspannungsgerüst NSG, das insbesondere der Verteilung von elektrischen Strömen im Niederspannungsbereich für die in der Lokomotive angeordneten Hilfsvorrichtungen dient.

Den Einrichtungen ES und NSG unmittelbar benachbart ist ein weiterer Fahrmotorlüfterturm MLT2 bzw. MLT3 am einen und anderen Ende des Lokomotiven-Mittelteils.

In Fahrtrichtung vor dem Lüfterturm MLT4 (ohne Beschränkung der Allgemeinheit wird der Führertisch FT1 als in Fahrtrichtung vorne liegend definiert) ist der Block AUX mit Hilfsvorrichtungen durch einen Mittelgang von dem Lüfterturm MLT3 getrennt. Gegenüber vorbekannten Lösungen wurden in diesem Block AUX ein Hilfsbetriebegerüst zum Betreiben verschiedener Hilfsvorrichtungen, die dem Betrieb des jeweiligen Aggregats der Lokomotive dienen, sowie entsprechende Hilfsbetriebeumrichter und ebenfalls für die Hilfsbetriebe benötigte Transformatoren zusammengefasst (d.h. integriert).

Von dem Block AUX auf der gegenüberliegenden Seite des bereits genannten Mittelganges sind in Fahrtrichtung von hinten nach vorne die optionale Feuerlöscheinheit FLE, die optionale Zugsicherungseinrichtung ZSS1 und optional ein Bremswiderstand BW angeordnet.

Im weiteren Verlauf in Fahrtrichtung nach vorne gabelt sich der Mittelgang auf in zwei außen liegende seitliche Gänge, die an dem Antriebsaggregat EP (bzw. dem dieselelektrischen Antriebsaggregat) vorbeiführen, wobei der rechte in Fahrtrichtung gesehene Gang als Stichgang ausgeführt ist.

In Fahrtrichtung vor dem Antriebsaggregat EP grenzt an dieses die Kühleinrichtung KT, insbesondere, ein Kühlturm KT.

In Fahrtrichtung vor dem Kühlturm KT geht einer der beiden seitlichen Gänge (in der Figur der obere) wieder in einen (zweiten) Mittelgang über. Auf der in Fahrtrichtung nach vorne gesehen linken Seite des zweiten Mittelganges befindet sich zunächst eine optionale Zugsicherungseinrichtung ZSS2, die den sicheren, unfallfreien Betrieb der Lokomotive auf Schienenwegen sichern. Unmittelbar an die Zugsicherungseinrichtung ZSS2 angrenzend in Fahrtrichtung nach vorne befindet sich der bereits erwähnte Motorlüfterturm MLT2. Auf der gegenüberliegenden Seite des zweiten Mittelganges befindet sich an den Kühlturm KT angrenzend das Luftgerüst LG (mit einem Luftgerüstelektronikschrank), das der Erzeugung und Speicherung der Druckluft für die Bremsanlage, Betriebs- und Hilfsbetriebsanlagen dient. In Fahrtrichtung nach vorne grenzt an das Luftgerüst LG der bereits erwähnte Fahrmotorlüfterturm MLT1 an.

Wegen der unterschiedlichen Funktionsweise der verschiedenen Aggregate, die in der Lokomotive verbaut werden können, wird es in der Regel einige Vorrichtungen geben, die speziell für einen bestimmten Aggregat-Typ ausgestaltet sind. Diese so genannten spezifischen Vorrichtungen werden (wie bereits oben erwähnt) vorzugsweise vollständig in dem Einrichtungsblock AUX angeordnet. Dies hat den Vorteil, dass außer dem Block AUX keine andere Vorrichtung speziell an das Aggregat angepasst werden muss bzw. abhängig von der Wahl des Aggregats ausgewählt werden muss. Der Block AUX kann z. B. vor dem Einbringen in die Lokomotive komplett fertig gestellt werden.

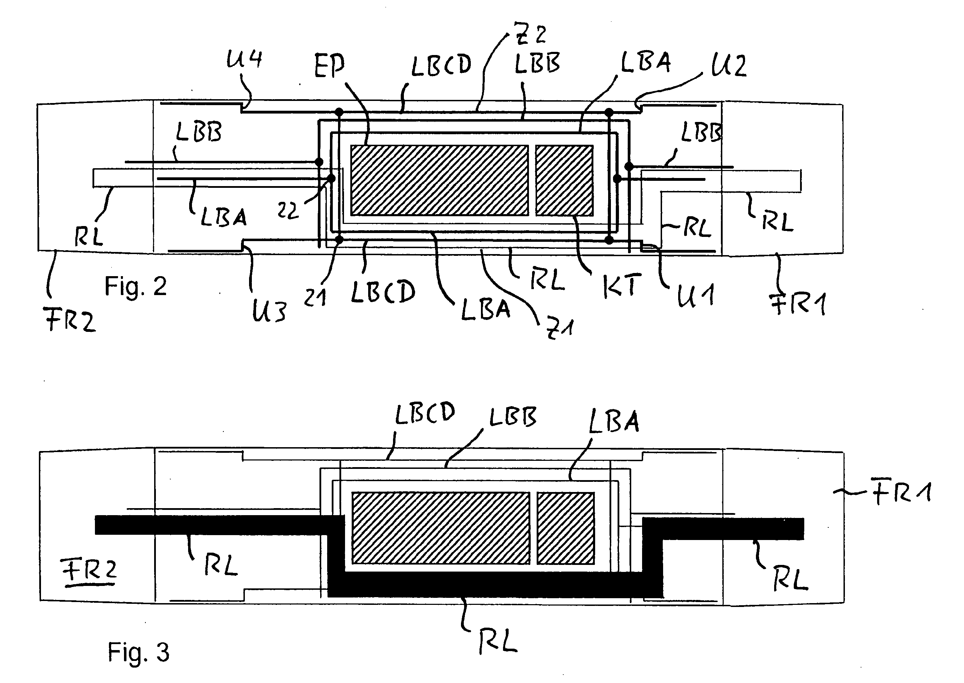

Ferner ist aus Figur 1 ein Bündel mit elektrischen und/oder nichtelektrischen Leitungen und Rohrleitungen erkennbar. Die Leitungen sind durch im Verhältnis zu den anderen in Figur 1 verwendeten Linien dickere Linien dargestellt, wobei jede dicke Linie ein Bündel mit mehreren elektrischen Leitungen darstellt. Wie aus Figur 2 erkennbar ist, handelt es sich um insgesamt vier Netze mit Leitungsbündeln für grundsätzlich verschiedene Funktionen. Jedes der Netze wird aus Leitungsbündeln gebildet, die an Verzweigungen (T-Punkten) durch einen kleinen schwarzen Kreis dargestellt sind. Z. B. ist links unten vom Antriebsaggregat EP ein Knoten dargestellt, der mit dem Bezugszeichen 21 bezeichnet ist. An diesem T-Punkt verzweigt sich das Leitungsbündel LBCD, das sämtliche elektrische Leitungen für die Übertragung von Steuersignalen enthält und/oder nichtelektrische Leitungen (z. B. Glasfaserkabel). An der Verzweigung 21 führen einige der elektrischen Leitungen aus dem Leitungsstrang, der sich in Längsrichtung des Fahrzeugs erstreckt, in einen Leitungsstrang, der sich quer zur Fahrtrichtung bzw. Längsrichtung des Fahrzeugs erstreckt. Das Leitungsbündelnetz LBCD hat insgesamt von oben gesehen die Form eines H, jedoch mit zwei Querstreben, wie sie auch bei Ausgestaltungen von Hosenträgern vorkommt. Unter Steuersignalen werden Signale verstanden, auch elektrische Signale, die nicht unmittelbar für die Steuerung von Einrichtungen übertragen werden, sondern z. B. Daten zwischen verschiedenen Einrichtungen übertragen, etwa über einen Datenbus. Steuersignale können als elektrische und/oder als nichtelektrische Ströme (z. B. Lichtsignale) ausgeführt sein.

Elektrische Leitungen für die Versorgung mit elektrischer Energie bilden die beiden anderen Bündelnetze mit den Bezugszeichen LBA und LBB, wobei das Bündelnetz LBA der Versorgung von Starkstromverbrauchern wie beispielsweise den Fahrmotoren in den Drehgestellen vom und hinten dienen und wobei das Bündelnetz LBB der Versor gung von Verbrauchern bei niedrigeren Spannungen als bei den Starkstromverbrauchern dient. Das Bündeinetz LBA hat von oben betrachtet die Form der Umrisslinien eines Rechtecks, wobei jeweils in der Mitte der beiden Schmalseiten des Rechtecks an einem T-Punkt eine Stichleitung in Richtung Führerraum FR1 bzw. FR2 abzweigt. Das Bündelnetz LBB hat von oben betrachtet etwa dieselbe Form wie das Bündelnetz LBA, wobei jedoch eine der beiden Längsseiten des Rechtecks fehlt, nämlich die unten in den Figuren 1 bis 3 dargestellte Längsseite.

Das Bündelnetz LBCD weist entsprechend der H-förmigen Konfiguration mit zwei Querverbindungen insgesamt vier Stichstränge auf, die sich jeweils von einer der Querverbindungen aus in Richtung Fahrtrichtung bzw. Gegenfahrtrichtung nach vorne bzw. hinten erstrecken. Jeder dieser Stichstränge verläuft zunächst etwa auf dem Niveau des Bodens des Fahrzeugs, bis er eine der mit U1 bis U4 bezeichneten Übergangsstellen erreicht, an denen jeweils ein Übergang auf ein höheres Niveau stattfindet. An diesen Übergangsstellen U1 bis U4 führen die Leitungsbündel von dem Bodenniveau aus nach oben in die jeweilige Seitenwand des Fahrzeugs. Auf dem erreichten oberen Niveau führen die Leitungsbündel weiter nach vorne bzw. weiter nach hinten. Bei der bevorzugten Ausgestaltung der Erfindung sind auch die Abschnitte des Leitungsbündels, die an den Übergangsstellen auf das obere Niveau führen und von dort aus weiter nach vorne bzw. weiter nach hinten im Fahrzeug führen, Teil der vormontierten Montageeinheit und werden einstückig in das Fahrzeug eingebracht.

In Figur 1 bis Figur 3 ist außerdem ein Rohrleitungsbündel RL dargestellt. Hervorgehoben ist das Rohrleitungsbündel RL in Figur 3 als sehr breite schwarze Linie. In Figur 1 und Figur 2 erkennt man lediglich die äußere Umrandungslinie des Rohrleitungsbündels RL. Das Rohrleitungsbündel RL führt vom hinteren Führerraum FR2 entlang dem Mittelgang bis zum Beginn des Maschinenraums, knickt dort nach rechts ab (bzw. knickt dort in der Darstellung gemäß Figur 1 bis Figur 3 nach unten ab), führt bis zu dem Beginn des Ganges im Maschinenraum, der auf der in Fahrtrichtung gesehen rechten Seite des Fahrzeuges liegt, führt entlang dieses Ganges durch den Maschinenraum, knickt am Ende des Maschinenraums nach links ab, erreicht den Mittelgang im vorderen Teil des Fahrzeugs und führt entlang dem Mittelgang bis zu dem vorderen Führerraum FR1. Wie auch bei den elektrischen Leitungen enden einzelne der Rohre im Verlauf des Rohrbündels RL oder zweigen im Verlauf ab.

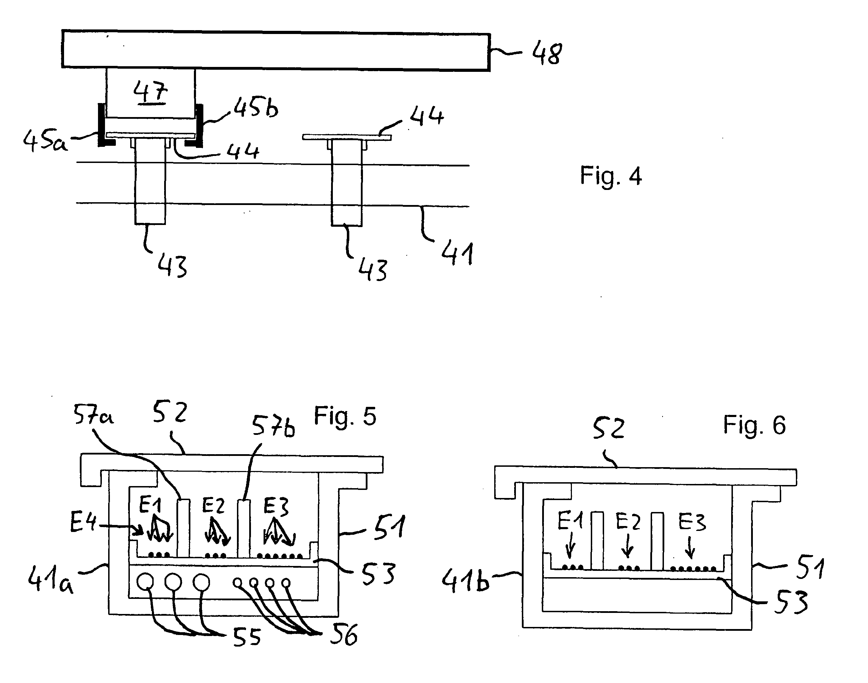

Figur 4 zeigt einen Abschnitt 41 einer Montageeinheit, insbesondere der in Figur 1 bis Figur 3 schematisch dargestellten Montageeinheit. Der Abschnitt 41 ist lediglich durch zwei von rechts nach links in der Figur verlaufende Linien angedeutet, die den oberen und unteren Rand des Leitungsbündels oder eines Gehäuses darstellen, in dem die Leitungen und optional die Rohre verlaufen. Ferner gehört zu dem Abschnitt 41 eine Mehrzahl von Trägerelementen 43, von denen zwei Stück in Figur 4 dargestellt sind. Die Trägerelemente 43 sind fest mit dem Leitungsbündel, dem Gehäuse und/oder anderen Teilen der Montageeinheit verbunden und sind insbesondere Teil der Montageeinheit, die vor dem Einbringen in das Fahrzeug vormontiert wird. Außerdem vormontiert sind an den Trägerelementen 43 Profile 44, die beidseitig rechts und links in der Darstellung von Figur 4 über die Ränder der Trägerelemente 43 hinausragen. Während die Trägerelemente 43 zumindest auch der Bildung des mechanischen, zumindest teilweise selbst tragenden Verbundes der Leitungen dienen, dienen die Profile 44 im Wesentlichen ausschließlich dem Einbringen der Montageeinheit in den Fahrzeug-Rohbau.

Ebenfalls in Figur 4 dargestellt sind eine Traverse 48, die lediglich während des Montagevorgangs an der Montageeinheit angebracht ist und zwar beispielsweise über ein nach unten von der Traverse 48 abragendes Teil 47, an dem wiederum zwei hakenartige Elemente 45a, 45b befestigt sind, die eines der Profile 44 an dessen gegenüber liegenden Enden umfassen, so dass bei einem Anheben oder Absenken der Traverse 48 auch das Profil 44 und damit der Abschnitt 41 der Montageeinheit angehoben bzw. abgesenkt wird.

Figur 5 zeigt einen Querschnitt durch eine erste Ausgestaltung eines Abschnitts 41 a der Montageeinheit, wobei die Leitungen bzw. Rohre in die Bildebene hineinführen bzw. aus dieser hervorragen. Bei dem Abschnitt 41 a kann es sich z. B. um den in Figur 4 dargestellten Abschnitt 41 handeln. Der Abschnitt 41 a weist ein Gehäuse mit einem Unterteil 51 (z. B. aus Aluminiumblech) und mit einem Deckel 52 (z. B. ebenfalls aus Aluminiumblech) auf. Im Innern des Gehäuses 51, 52 ist ein Zwischenboden 53 angeordnet, der an den Seitenwänden des Gehäuse-Unterteils 51 befestigt ist, so dass er das Gehäuse 51, 52 in einen unteren Bereich unterhalb des Zwischenbodens 53 und in einen oberen Bereich oberhalb des Zwischenbodens 53 unterteilt.

Der obere Bereich ist ferner durch in Längsrichtung des Gehäuses (senkrecht zur Bildebene) verlaufende Trennelemente 57a, 57b in drei Teile (oder bei alternativen Ausgestaltungen durch eine andere Anzahl von Trennelementen in eine andere Anzahl von Teilbereichen) unterteilt.

Unterhalb des Zwischenbodens 53 verfäuft eine Mehrzahl von Rohren 55, 56 in Längsrichtung des Gehäuses. Dabei können die Rohre 55, 56 unterschiedliche Außenabmessungen (bei Rohren mit kreisförmigem Querschnittrohrdurchmesser) aufweisen. Der Bereich unterhalb des Zwischenbodens 53 kann zur Positionierung der Rohre weitere Elemente aufweisen, so dass die Rohre 55, 56 beispielsweise genau in der Figur 5 dargestellten Position gehalten werden. Beispielsweise kann der untere Bereich einen Einsatz aufweisen, der in vertikaler Richtung zweigeteilt ist. Bei der Vormontage der Montageeinheit wird dann zunächst die untere Hälfte des Einsatzes in das Gehäuseunterteil 51 eingebracht, dann die Rohre 55, 56 eingebracht, dann die obere Hälfte des Einsatzes eingebracht, dann der Zwischenboden 53 eingebracht und erst nach dem Verlegen der elektrischen Leitungen der Gehäusedeckel 52 geschlossen.

Die elektrischen und/oder nichtelektrischen Leitungen (z. B. Glasfaserleitungen) sind z. B. entsprechend der Unterteilung in die drei Teilbereiche oberhalb des Zwischenbodens 53 in vier Leitungsbündel E1, E2, E3, E4 aufgeteilt, wobei Leitungsbündel E1, E4 in einem Teilbereich liegen. Es kann jedoch auch je ein separater Teilbereich für diese beiden Leitungsbündel vorgesehen sein, also insgesamt vier Teilbereiche. Das Leitungsbündel E1 und das Leitungsbündel E4 weisen beispielsweise die Leitungen des Bündelnetzes LBCD auf, das Leitungsbündel E2 Leitungen des Bündelnetzes LBB und das Leitungsbündel E3 Leitungen des Bündelnetzes LBA gemäß Figuren 1 bis 3. Die Unterteilung in zwei Leitungsbündel E1, E4 wurde vorgenommen, um die Möglichkeit anzudeuten, dass es sich um Leitungen (E1) für elektrische Signale und Leitungen (E4) für nichtelektrische Signale (z. B. digitale Signale, etwa für einen Datenbus handeln kann. Dabei können die nichtelektrischen Leitungen des Busses z. B. auch Kupferkabel aufweisen.

Figur 6 zeigt eine weitere Ausführungsform eines Abschnitts 41b der Montageeinheit. Beispielsweise ist der in Figur 5 dargestellte Abschnitt 41 a derjenige Zweig der Montageeinheit, der in Figur 1 bis Figur 3 auf der in Fahrtrichtung rechten Seite (unterer Bereich der Figuren) verläuft, und zwar in dem Abschnitt zwischen dem Mittelgang und der unten in den Figuren dargestellten Außenwand des Fahrzeugs, wo sowohl Rohre als auch elektrische Leitungen sämtlicher drei Bündelnetze verlaufen. Dagegen ist der in Figur 6 dargestellte Abschnitt 41 b beispielsweise ein Abschnitt des Zweiges, der in den Figuren 1 bis 3 auf der in Fahrtrichtung linken Seite des Fahrzeugs, d. h. oben in den Figuren 1 bis 3 durch den Maschinenraum verläuft. In diesem Abschnitt sind elektrische Leitungen aller drei Bündelnetze verlegt.

Der einzige Unterschied des in Figur 6 dargestellten Abschnitts 41 b zu dem in Figur 5 dargestellten Abschnitt 41 a ist die Tatsache, dass in dem Abschnitt 41 b keine Rohre verlaufen. Auch die Anzahl der einzelnen elektrischen Leitungen in den Leftungsbündeln E1 bis E4 kann variieren.

Es können diverse Modifikationen an den anhand von Figur 4 bis Figur 6 dargestellten Ausgestaltungen der Montageeinheit vorgenommen werden, wobei die einzelnen Ausgestaltungen bzw. Modifikationen in verschiedenen Abschnitten derselben Montageeinheit realisiert werden können. Z. B. kann bei dem Abschnitt 41 b gemäß Figur 6 der Zwischenboden 53 entfallen, da dort keine Rohrleitungen verlegt sind. Generell wird aber bevorzugt, dass ein Abschnitt, der sowohl Rohrleitungen als auch elektrische Leitungen aufweist, eine wie z. B. in Figur 5 und Figur 6 dargestellte mehrgeschossige Konfiguration aufweist, in der in einem unteren Geschoss bzw. in einer unteren Lage eine erste Art von Leitungen, z. B. Rohrleitungen, verlegt sind und wobei in zumindest einem weiteren, oberhalb von dem Untergeschoss bzw. der unteren Lage angeordneten weiteren Geschoss bzw. Lage eine andere Art von Leitungen, z. B. die verschiedenen elektrischen Leitungen verlegt sind. Insbesondere bei geeigneter Ausgestaltung von Führungen und Halterungen, die die Rohrleitungen positionieren, können die Rohrleitungen zur mechanischen Versteifung und zur Ausbildung eines im Wesentlichen selbst tragenden Abschnitts benutzt werden.

Die anhand von Figur 1 bis Figur 3 beispielhaft erläuterte Ausgestaltung einer Montageeinheit mit einem Zweig auf der in Fahrtrichtung rechten Seite und mit einem Zweig auf der in Fahrtrichtung linken Seite des Maschinenraums hat den Vorteil, dass in den Bereichen, wo die Zweige sich trennen (die Verzweigungsbereiche) weniger Platz benötigt wird und/oder eine einfachere Leitungsführung innerhalb des Leitungsbündels möglich ist als bei einer Ausgestaltung, in der sämtliche elektrischen Leitungen durch nur einen der Zweige geführt werden. Auch ist die Ausgestaltung einfacher, wenn zwei Zweige vorhanden sind, als wenn sämtliche Rohrleitungen und elektrischen Leitungen auf nur einer Seite an dem Antriebsaggregat entlangführen. Ferner vereinfacht eine Verbiegung im Bodenbereich des Maschinenraums die Montage und schafft Platz zwischen Antriebsaggregat und Außenwand für zwei Gänge. Aufgrund der G-förmigen Form des Bündelnetzes für Signalleitungen können Einrichtungen angeschlossen werden, die jeweils zwischen dem Führerraum FR und dem Maschinenraum liegen, ohne dass eine Leitungsführung unmittelbar entlang der Führerraumrückwand erforderlich ist. Insbesondere spart dies Platz im Bereich der Führerraumrückwand, so dass der Platz für dort anzuordnende Einrichtungen genutzt werden kann. Der Anschluss der Signalleitungen an die jeweiligen Einrichtungen erfordert daher nur geringen zusätzlichen Verkabelungsaufwand.

## Patentansprüche

1. Schienen-Triebfahrzeug, das eine Montageeinheit aufweist, wobei die Montageeinheit elektrische Leitungen (E1, E2, E3, E4) aufweist,
**dadurch gekennzeichnet,**
**dass** die Montageinheit aufweist:
• Fluidrohre (55, 56), insbesondere für ein pneumatisches System und optional für Wasser und/oder technische Gase für ein Feuerlöschsystem,
• elektrische und/oder nichtelektrische Leitungen zur Übertragung von Signalen (Signalleitungen E1, E4) und
• elektrische Leitungen (E2, E3) zur Versorgung von Verbrauchern mit
elektrischer Energie,
wobei die Montageeinheit einen mechanischen Verbund der Fluidrohre (55, 56), der Signalleitungen (E1, E4) und der Energieleitungen (E2, E3) aufweist, sodass der gesamte Verbund bei der Montage des Schienen-Triebfahrzeuges einstückig
in einen Fahrzeugkörper des Schienen-Triebfahrzeug eingebracht ist,
wobei ein Teil der Fluidrohre, Signalleitungen und Energieleitungen einen ersten Zweig (Z1) der Montageeinheit bildet, wobei ein Teil der Fluidrohre, Signalleitungen und Energieleitungen einen zweiten Zweig (Z2) der Montageeinheit bildet, wobei der erste Zweig (Z1) und der zweiten Zweig (Z2) im Wesentlichen parallel zueinander verlaufen und voneinander beabstandet verlaufen und
wobei die Montageeinheit im Verlauf zumindest eines Teils der Fluidrohre (55, 56) und Leitungen (E1, E2, E3, E4) sich in den ersten Zweig (Z1) und in den zweiten (Z2) Zweig verzweigt und die Zweige (Z1, Z2) wieder zu einem gemeinsamen Strang der Montageeinheit zusammenführen.

2. Schienen-Triebfahrzeug dem vorhergehenden Anspruch, wobei sich die Montageeinheit zumindest über die gesamte Länge eines Maschinenraums des Schienen-Triebfahrzeuges erstreckt.

3. Schienen-Triebfahrzeug Anspruch 1 oder 2, wobei der Abstand des ersten (Z1) und zweiten (Z2) Zweiges zuzüglich der Breite des ersten Zweiges (Z1) und zuzüglich der Breite des zweiten Zweiges (Z2) etwa gleich der Breite des Schienen-Triebfahrzeuges ist.

4. Schienen-Triebfahrzeug nach einem der vorhergehenden Ansprüche, wobei die Länge der Zweige (Z1, Z2) etwa gleich der Länge eines Maschinenraums des Schienen-Triebfahrzeuges ist.

5. Schienen-Triebfahrzeug nach einem der vorhergehenden Ansprüche, wobei die beiden Zweige (Z1, Z2) etwa auf gleicher Höhe verlaufen und insbesondere zur Montage der Zweige (Z1, Z2) an einem Boden des Schienen-Triebfahrzeuges ausgestaltet sind.

6. Verfahren zum Montieren eines Schienen-Triebfahrzeuges, wobei eine Montageeinheit gebildet wird, die eine Mehrzahl von elektrischen Leitungen (E1, E2, E3, E4) aufweist,
**dadurch gekennzeichnet,**
**dass** zunächst aus
• Fluidrohren (55, 56), insbesondere für ein pneumatisches System und optional für Wasser und /oder technische Gase für ein Feuerlöschsystem,
• elektrischen und/oder nichtelektrischen Leitungen zur Übertragung von Signalen (Signalleitungen E1, E4) und
• elektrischen Leitungen (E2, E3) zur Versorgung von Verbrauchern mit
elektrischer Energie (Energieleitungen),
die Montageeinheit gebildet wird, die einen mechanischen Verbund der Fluidrohre (55, 56), der Signalleitungen (E1, E4) und der Energieleitungen (E2, E3) aufweist,
wobei ein Teil der Fluidrohre, Signalleitungen und Energieleitungen einen ersten Zweig (Z1) der Montageeinheit bildet, wobei ein Teil der Fluidrohre, Signalleitungen und Energieleitungen einen zweiten Zweig (Z2) der Montageeinheit bildet, wobei der erste Zweig (Z1) und der zweiten Zweig (Z2) im
• Wesentlichen parallel zueinander verlaufen und voneinander beabstandet verlaufen
wobei die Montageeinheit im Verlauf zumindest eines Teils der Fluidrohre (55, 56) und Leitungen (E1, E2, E3, E4) sich in den ersten Zweig (Z1) und in den zweiten (Z2) Zweig verzweigt und die Zweige (Z1, Z2) wieder zu einem gemeinsamen Strang der Montageeinheit zusammenführen.
und wobei der gesamte Verbund einstückig in einen Fahrzeugkörper des Schienen-Triebfahrzeuges eingebracht wird.

## Claims

1. Railway traction vehicle, which has a mounting unit, wherein the mounting unit has electrical lines (E1, E2, E3, E4),
**characterized**
**in that** the mounting unit comprises:
• fluid pipes (55, 56), in particular for a pneumatic system and optionally for water and/or technical gases for a fire extinguishing system,
• electrical and/or non-electrical lines for transmission of signals (signal lines E1, E4) and
• electrical lines (E2, E3) for supplying loads with
electrical energy,
wherein the mounting unit has a mechanical assembly of the fluid pipes (55, 56), of the signal lines (E1, E4) and of the energy lines (E2, E3), such that the entire assembly is fitted integrally to a vehicle body of the railway traction vehicle during assembly of the railway traction vehicle,
wherein a part of the fluid pipes, signal lines and power lines form a first branch (Z1) of the mounting unit, wherein a part of the fluid pipes, signal lines and power lines form a second branch (Z2) of the mounting unit, wherein the first branch (Z1) and the second branch (Z2) extend essentially parallel to one another and extend at a distance from one another, and wherein the mounting unit branches into the first branch (Z1) and into the second branch (Z2) during the course of at least some of the fluid pipes (55, 56) and lines (E1, E2, E3, E4), and the branches (Z1, Z2) are joined together again to form a common strand of the mounting unit.

2. Railway traction vehicle according to the preceding claim, wherein the mounting unit extends at least over the entire length of a machine compartment of the railway traction vehicle.

3. Railway traction vehicle according to Claim 1 or 2, wherein the distance between the first branch (Z1) and the second branch (Z2) plus the width of the first branch (Z1) and plus the width of the second branch (Z2) is approximately equal to the width of the railway traction vehicle.

4. Railway traction vehicle according to one of the preceding claims, wherein the length of the branches (Z1, Z2) is approximately equal to the length of a machine compartment in the railway traction vehicle.

5. Railway traction vehicle according to one of the preceding claims, wherein the two branches (Z1, Z2) run approximately at the same height and are designed in particular for mounting the branches (Z1, Z2) on a base of the railway traction vehicle.

6. Method for assembly of a railway traction vehicle, wherein a mounting unit is formed which has a plurality of electrical lines (E1, E2, E3, E4),
**characterized in that**
the mounting unit is first of all formed from
• fluid pipes (55, 56), in particular for a pneumatic system and optionally for water and/or technical gases for a fire extinguishing system,
• electrical and/or non-electrical lines for transmission of signals (signal lines E1, E4) and
• electrical lines (E2, E3) for supplying loads with
electrical energy,
which mounting unit has a mechanical assembly of fluid pipes (55, 56), of signal lines (E1, E4) and energy lines (E2, E3),
wherein a part of the fluid pipes, signal lines and energy lines form a first branch (Z1) of the mounting unit, wherein a part of the fluid pipes, signal lines and energy lines form a second branch (Z2) of the mounting unit, wherein the first branch (Z1) and the second branch (Z2) extend essentially parallel to one another and extend at a distance from one another, and wherein the mounting unit branches into the first branch (Z1) and into the second branch (Z2) during the course of at least some of the fluid pipes (55, 56) and lines (E1, E2, E3, E4), and the branches (Z1, Z2) are joined together again to form a common strand of the mounting unit,
and wherein the entire assembly is fitted integrally to a vehicle body of the railway traction vehicle.

## Revendications

1. Véhicule ferroviaire automoteur qui présente une unité de montage, l'unité de montage présentant des lignes électriques (E1, E2, E3, E4),
**caractérisé en ce que** l'unité de montage présente :
- des tubes fluidiques (55, 56) en particulier pour un système pneumatique et en option pour de l'eau et/ou des gaz techniques pour un système d'extinction d'incendie,
- des lignes électriques et/ou non électriques pour la transmission de signaux (lignes de signaux E1, E4) et
- des lignes électriques (E2, E3) pour l'alimentation de consommateurs en énergie électrique,
l'unité de montage présentant un assemblage mécanique des tubes fluidiques (55, 56), des lignes de signaux (E1, E4) et des lignes d'énergie (E2, E3) de sorte que l'assemblage entier soit introduit lors du montage du véhicule ferroviaire automoteur d'un seul tenant dans un corps du véhicule ferroviaire automoteur,
une partie des tubes fluidiques, des lignes de signaux et des lignes d'énergie formant une première branche (Z1) de l'unité de montage, une partie des tubes fluidiques, des lignes de signaux et des lignes d'énergie formant une seconde branche (Z2) de l'unité de montage, la première branche (Z1) et la seconde branche (Z2) s'étendant essentiellement parallèlement et à distance l'une de l'autre et
l'unité de montage bifurquant dans le tracé d'au moins une partie des tubes fluidiques (55, 56) et des lignes (E1, E2, E3, E4) dans la première branche (Z1) et dans la seconde branche (Z2) et les branches (Z1, Z2) se réunissant de nouveau en un branche commune de l'unité de montage.

2. Véhicule ferroviaire automoteur selon la revendication précédente, dans le quel l'unité de montage s'étend au moins sur toute la longueur d'un compartiment des machines du véhicule ferroviaire automoteur.

3. Véhicule ferroviaire automoteur selon la revendication 1 ou 2, dans lequel la distance entre la première (Z1) et la seconde branche (Z2) plus la largeur de la première branche (Z1) et plus la largeur de la seconde branche (Z2) est à peu près identique à la largeur du véhicule ferroviaire automoteur.

4. Véhicule ferroviaire automoteur selon l'une des revendications précédentes, dans lequel la longueur des branches (Z1, Z2) est à peu près identique à la longueur d'un compartiment des machines du véhicule ferroviaire automoteur.

5. Véhicule ferroviaire automoteur selon l'une des revendications précédentes, dans lequel les deux branches (Z1, Z2) s'étendent à peu près à la même hauteur et sont configurées en particulier pour le montage des branches (Z1, Z2) sur un fond du véhicule ferroviaire automoteur.

6. Procédé de montage d'un véhicule ferroviaire automoteur, dans lequel on forme une unité de montage qui présente une pluralité de lignes électriques (E1, E2, E3, E4), **caractérisé en ce que** l'on forme d'abord l'unité de montage à partir
- de tubes fluidiques (55, 56), en particulier pour un système pneumatique et en option pour de l'eau et/ou des gaz techniques pour un système d'extinction d'incendie,
- de lignes électriques et/ou non électriques pour la transmission de signaux (lignes de signaux E1, E4) et
- de lignes électriques (E2, E3) pour l'alimentation de consommateurs en énergie électrique (lignes d'énergie), laquelle unité de montage présentant un assemblage mécanique de tubes fluidiques (55, 56), de lignes de signaux (E1, E4) et de lignes d'énergie (E2, E3),
une partie des tubes fluidiques, des lignes de signaux et des lignes d'énergie formant une première branche (Z1) de l'unité de montage, une partie des tubes fluidiques, des lignes de signaux et des lignes d'énergie formant une seconde branche (Z2) de l'unité de montage, la première branche (Z1) et la seconde branche (Z2) s'étendant essentiellement parallèlement et à distance l'une de l'autre,
l'unité de montage bifurquant dans le tracé d'au moins une partie des tubes fluidiques (55, 56) et des lignes (E1, E2, E3, E4) dans la première branche (Z1) et dans la seconde branche (Z2), et les branches (Z1, Z2) se réunissant de nouveau en une branche commune de l'unité de montage,
et dans lequel procédé l'assemblage entier est introduit d'un seul tenant dans un corps du véhicule ferroviaire automoteur.
